# EUROPEAN PATENT APPLICATION

(11) **EP 3 133 567 A1**
(43) Date of publication of application: **22.02.2017**
(21) Application number: 15181984.4
(22) Date of filing: 21.08.2015
(51) Int. Cl.: G08B 13/04, G01D 11/24

(54) **METHOD FOR COLLECTING ENVIRONMENTAL PARAMETERS OF SPACES SURROUNDING PERSONS, ECOSYSTEMS COMPRISING THE SPACES, GLAZING OF A WINDOW OF THE SPACES**

(71) Applicant: AGC Glass Europe, 1348 Louvain-la-Neuve (BE)
(72) Inventor: DEMEYERE, Michaël, 5380 Forville (BE); AYOUB, Patrick, 1348 Louvain-La-Neuve (BE); VERBEEREN, Bart, 6041 Gosselies (BE)
(74) Representative: Chabou, Samia

(57) **Abstract**

The invention concerns a method for collecting environmental parameters 4 of spaces 3 surrounding persons 2 with a set of sensors 6 of an ecosystem 1 for sensing these parameters, the system comprising means 6 for extracting data from the parameters 4, means 8 for uploading the data to a database 7 for storing the data thus accessible to entities 9 dedicated to the implementation of the data in applications.

## Description

The invention relates to ecosystems. Wikipedia gives a good definition of an ecosystem in the sense of the instant application. It is a community of living organisms (biotic components) in conjunction with non living (abiotic) components of their environment, like air, water, soil, interacting as a system Ecosystems provide a variety of goods and services upon which people defend.

Actually, the instant invention relates to urban ecosystems with an object of improving the environmental conditions of humans during their private life as well as their professional life.

The instant case relates to a mixture of a biological and environmental ecosystem and a business ecosystem, it being similar to a biological ecosystem but involving organizations and entities delivering goods and services through competition and cooperation.

Such a system includes several players and assemblies:
- a community of persons, living within,
- surrounding spaces characterized by environmental parameters, such as homes and office buildings,
- a network of sensors for sensing the environmental parameters and extracting there from data,
- a database, usually in the cloud collecting these data,
- entities accessing the data and implementing them in applications, for the benefit of the persons of the community according to pay per use agreements, for these persons to improve their life within their surrounding spaces thanks to the knowledge of said environmental parameters.

As a first example of such a mixed ecosystem, one knows of a corporation selling smart thermostats for sensing climatic conditions inside homes and the people living there may, thanks to a specific application programming interface, access on their smartphone climatic parameters of their home, such as temperature, and proceed to a remote action on the equipment of the home.

Another example relates to a network of meteorological sensors owned by a company, the data of which are worked out by another company which sells its information to the public.

On that basis, the applicant got the idea of improving the collection of the above mentioned environmental parameters and thus offers the instant invention.

The invention relates to a method for collecting environmental parameters of spaces surrounding persons with a set of sensors of an ecosystem for sensing these parameters, the system comprising means for extracting data from the parameters, means for uploading the data to a database for storing the data thus accessible to entities dedicated to the implementation of the data in applications, characterized by:
- providing the spaces in buildings provided with windows with a glazing made of at least two sheets of glass, with at least a spacer and sealant in between,
- mounting at least a sensor between the two sheets and
- communicating the data outside the windows.

As examples of environmental parameters, one may consider a sound generated by a glass breakage, a vibration or a shock provided by the tilting of a window, a noise, a temperature, a humidity, a light, glazing insulation, rain, wind, allergens, etc.

When referring to the parameters of a space surrounding the persons of the ecosystem, it is meant the space itself, in other words inside of the space, as well as outside the space but close to it, up to a distance for which the single sensor or the series of sensors can still operate.

By space, it should be understood a place where people live or work. It could be a house, a flat, an office building, even a simple room of a house or office building, a factory, a shed or an entertainment place.

The database where the data are uploaded could be in the cloud. But it could also be located inside or outside the space (the building), without being in the cloud, in case of a building management system (BMS).

The entities dedicated to the implementation of the data are usually start-up organizations.

It should be understood that the windows of the spaces of the ecosystem referred to here are partitions between places where people live or work and the outside world, in other words, between an internal world and an external world.

The space between the two sheets of glass is provided for holding them apart. The sealant is provided for holding the spacer and the two glass sheets.

EP 2 024 594 teaches to mount sensors between two glass sheets. However, these sensors are provided for retrieving information relating to the origin, manufacture and properties of the glass exclusively. The problem at the origin of the invention of this case was to trace the products, to ascertain whether a glass unit is genuinely of the manufacturer or to identify the source of the unit if defective.

The problem of this prior art reference has nothing to do with the problem of the instant case which was to better or easily collect environmental information in an ecosystem.

In the prior art, the main concern was the glass unit. In the instant case, the main concern is to retrieve information in an ecosystem. The glass unit, which is still essential, is just a supporting means.

The above reference does not give any hint for considering a window / glazing as a partition between two worlds and this is why the method of the instant application involves the requested inventive step.

In a preferred implementation of the method of the invention, the data are communicated outside the windows through low energy and wireless communication, such as blue tooth (LEBT transmission), WiFi, WirelessHART, ZigBee, NFC, or RFID, or through connectors.

Advantageously, one can add other data to those of the database, for instance NEST data.

Still preferably, the sensor or the series of sensors are power supplied with harvested energy, through, for instance, solar cells, thermo electricity, vibrations.

In another preferred implementation of the method of the invention, at least one sensing patch is mounted onto the outside surface of one of the glass sheets, for sensing specific parameters.

Another aspect of the invention, linked to the method of the above first aspect, relates to a

method for collecting environmental parameters of spaces surrounding persons with a set of sensors of an ecosystem for sensing these parameters, the system comprising means for extracting data from the parameters, means for uploading the data to a database for storing the data thus accessible to entities dedicated to the implementation of the data in applications, characterized by:
- providing the spaces in buildings provided with windows with a glazing made of a laminated pane with two sheets of glass and an inner plastic material in between,
- mounting at least a sensor between the two sheets and
- communicating the data outside the windows.

It should be pointed out here that glazing should be understood as a glass partition between two worlds, although it is not always the meaning of it.

A further aspect of the invention, still linked to the method of the two above aspects, relates to a method for collecting environmental parameters of spaces surrounding persons with a set of sensors of an ecosystem for sensing these parameters, the system comprising means for extracting data from the parameters, means for uploading the data to a database for storing the data thus accessible to entities dedicated to the implementation of the data in applications, characterized by:
- providing the spaces in buildings provided with windows with a glazing made of a monolithic sheet of glass,
- mounting at least one sensing patch onto one of the surfaces of the sheet and
- communicating the data outside the windows.

The invention also relates to an ecosystem comprising spaces surrounding persons, a set of sensors, for sensing environmental parameters of said spaces, means for extracting data from the parameters, means for uploading the data to a database for storing the data, entities for accessing said data and implementing them in applications,
characterized in that said spaces are provided in buildings provided with windows with a glazing made of at least two sheets of glass, with at least a spacer and sealant in between, at least a sensor being mounted between the two sheets and means being provided for communicating said data outside the windows.

Obviously, the ecosystem and the method for collecting the parameters are linked by the same inventive concept.

The comments made in connection with the collecting method also apply to the ecosystem.

In the preferred embodiment of the ecosystem of the invention, the sensor and the data extracting means are integrated within a sensor hub.

In one embodiment, the spacer is located between the sealant and the sensor, in another one, the sensor is between the spacer and the sealant and in a further embodiment, where at least one of the windows of the spaces comprises a glazing with three sheets of glass, two of them forming a laminated pane, and the sensor is located between the two sheets of the laminated pane.

Advantageously, a sensing patch is affixed to the outside surface of at least one of the glass sheets.

Like with the method of the invention, the invention also relates to an ecosystem comprising spaces surrounding persons, a set of sensors, for sensing environmental parameters of said spaces, means for extracting data from the parameters, means for uploading the data to a database for storing the data, entities for accessing said data and implementing them in applications,
characterized in that said spaces are provided in buildings provided with windows with a glazing made of a laminated pane with two sheets of glass, and an inner plastic material in between, at least a sensor being mounted between the two sheets and means being provided for communicating said data outside the windows.

Like with the method of the invention, the invention also relates to an ecosystem comprising spaces surrounding persons, a set of sensors, for sensing environmental parameters of said spaces, means for extracting data from the parameters, means for uploading the data to a database for storing the data, entities for accessing said data and implementing them in applications,
characterized in that said spaces are provided in buildings provided with windows with a glazing made of a monolithic sheet of glass, at least one sensing patch being mounted onto one of the surfaces of the sheet and means being provided for communicating said data outside the windows.

As intermediate product of the ecosystem of the invention, the invention further relates to a glazing of a window of a space surrounding persons of an ecosystem,
characterized in that it comprises at least two sheets of glass with at least a spacer and sealant between the two sheets and at least a sensor between the two sheets for sensing environmental parameters of the space, prior to extracting data therefrom to be uploaded to a database accessible to entities of the ecosystem dedicated to the implementation of the data in applications for the benefit of the persons of the ecosystem.

The glazing, the ecosystem and the collecting method are obviously linked by a unique inventive concept. The glazing also involves the requested inventive step as the ecosystem and the collecting method do.

It should be pointed out here that, besides the function of the glazing with a sensor inside, the invention provides the advantage of the sensor being protected properly by the glazing.

In one embodiment of the glazing of the invention, it comprises three sheets of glass, two of them forming a laminated pane, the sensor being located between the two sheets of the laminated pane.

Like with the method and the ecosystem, the invention also relates to a glazing of a window of a space surrounding persons of an ecosystem,
characterized in that it comprises a laminated pane with two sheets of glass and an inner plastic material between the two sheets and a sensor between the two sheets for sensing environmental parameters of the space, prior to extracting data therefrom to be uploaded to a database accessible to entities of the ecosystem dedicated to the implementation of the data in applications for the benefit of the persons of the ecosystem.

Like with the method and the ecosystem, the invention also relates to a glazing of a window of a space surrounding persons of an ecosystem,
characterized in that it comprises a monolithic sheet of glass and at least one sensing patch affixed onto one of the surfaces of the sheet for sensing environmental parameters of the space, prior to extracting data therefrom to be uploaded to a database accessible to entities of the ecosystem dedicated to the implementation of the data in applications for the benefit of the persons of the ecosystem.

The invention should be better understood upon reading the following description in view of the attached drawing in which:
- figure 1 is a representation of the ecosystem of the invention;
- figure 2 is a partial view in perspective and in section of a window with a glazing of the invention and
- figures 3A-3D represent cross-sectional views of four embodiments of the glazing of the invention, respectively with:
   o the spacer between the sealant and the sensor hub,
   o the sensor hub between the spacer and the sealant,
   o the sensor hub between two sheets of a laminated pane of the glazing and
   o sensing patches affixed to the outside surface of two glass sheets of the glazing.

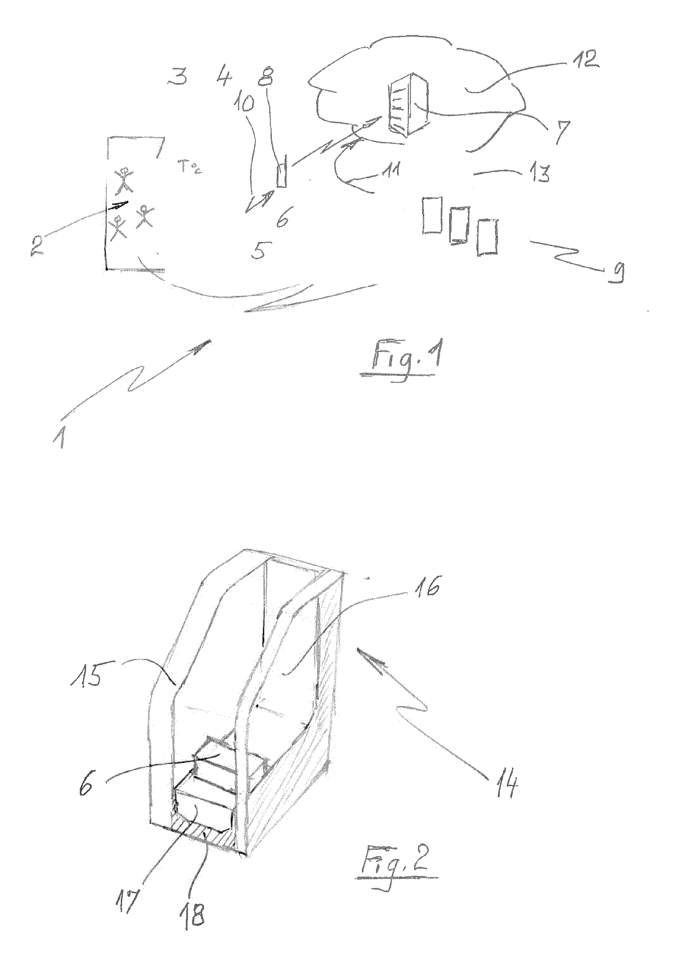

The invention relates to an ecosystem 1 as represented on figure 1, including several players and assemblies.

A community of persons 2 is living in a space 3 - a house or a series of offices in an office building. The persons are located within the space, of course not for ever since they can move and even leave the space. However, for sake of simplicity, it should be stated that the space 3 surrounds the persons 2.

Space 3 is characterized by environmental parameters 4, some of them having been listed above.

The space 3 is provided with windows, one of them 5 is shown on the figure, associated here with one sensor hub 6.

The sensor or the series of sensors of the hub 6) are provided for sensing the parameters 4 and for retracting therefrom data which are uploaded to a database 7, also called data platform.

The uploading means, which could also be defined as carrying means, is advantageously a smart device, here a smartphone 8. A bunch of entities 9, generally start-ups, are parties to the ecosystem 1 and whose business is to implement the data.

The location of the sensor hub 6 with respect to the windows 5 is an important feature of the invention, but for sake of a better understanding the operation of the ecosystem 1 will be described first.

The ecosystem is operated under the supervision of an operator.

The data, extracted from the parameters 4 sensed by the sensors of the hub 6 by means of electronical extracting means of hub 6, are communicated to the data base and server 7 of the operator here through low energy blue tooth (LEBT) signals 10.

Any device, like the smartphone 8, that can pick up LEBT signals, can receive the data and provide them to the ecosystem 1, which is here and preferably an open system. The data are distributed through an application programming interface (API) which is thus here an open source API.

It could be decided to offer the API for free to nongovernmental organizations, whereas the start-up companies 9 would have to execute a license agreement and pay royalties to the operator.

When a start-up company 9 wants to make use of data from hub 6, its applications and smart device 8 must upload 11 these data to the database 7 for accessing all the data already stored in the database 7, this providing an enrichment of the full database 7.

The database 7 is preferably in the cloud 12.

Once a start-up company 9 has retrieved 11, 13 the data of interest to it, the data are implemented in its applications.

In any window 5 of a room or office, there could be provided a sensor hub 6.

A window 5 of the ecosystem of the instant case has a glazing 14 with here two sheets of glass 15, 16 and, in between, a spacer 17, a sealant 18 and a sensor hub 6 including sensor(s), electronical extracting means, for extracting data from the parameters sensed by the sensors, and means for emitting and communicating the data outside the window. The spacer is for holding the glass sheets apart and the sealant, besides its sealing function, is provided for holding the spacer and the glass sheets together. It goes without saying that the hub 6 keeps also a record of the various specifications of the glass.

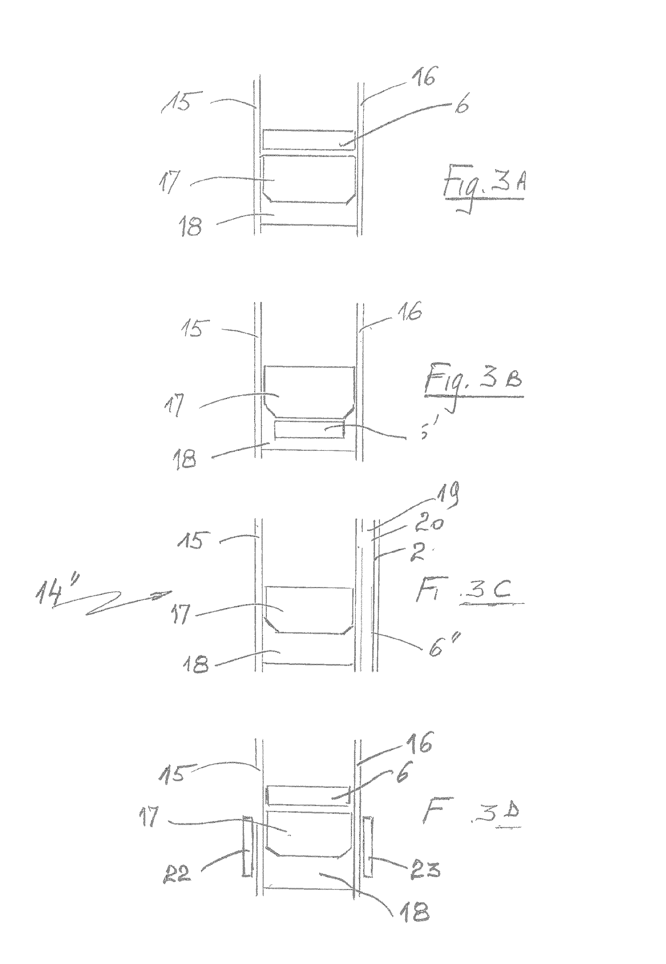

In the embodiment of figures 2 and 3A, the spacer 17 is located between the sealant 18 and the sensor hub 6.

In the embodiment of figure 3B, the sensor hub 6' is anchored within the sealant 18 and, hence, located between the spacer 17 and the sealant 18.

In both embodiments of figures 3A, 3B, the sensor hub 6, 6' is in a horizontal position.

In the embodiment of figure 3C, the second glass sheet 16 is replaced by a laminated pane 19 with two sheets 20, 21, so that the glazing 14" of the window comprises three glass sheets 15, 20, 21. In this embodiment, the sensor hub 6" is in a vertical position and located between the two glass sheets 20, 21 of the laminated pane 19.

In the embodiment of figure 3D, the glazing has two glass sheets 15, 16, with a sensor hub 6, a sealant 18 and a spacer 17 in between. In addition thereto, two sensing patches 22, 23 have been here affixed to the outside surface of both glass sheets 15, 16, respectively.

Obviously, a sensing patch could also be affixed onto the outside of the glass sheet 21 of the laminated pane 19.

Referring to the outside surface of a glass sheet should be understood as the surface of the sheet opposite the space between the two glass sheets or the glass sheet and the laminated pane of the glazing.

The outside surface of one glass sheet faces the inside of the space where the persons live or work and the outside surface of the other glass sheet is really outside the window.

Reverting to the sensing patches 22, 23, they are preferably smart patches and could be linked up to the hub 6, either by a physical connector or wirelessly. They may capture all kinds of parameters and data outside and inside the space for the persons live or work.

Have been described glazings of a window with two sheets of glass and a spacer and sealant in between. However, the scope should not be limited thereto. The glazing of the invention could include more than two sheets and a corresponding number of spacers and sealants. Even more, the glazing could be filled up with vacuum.

The glazings described above include a sensor between the sheets of glass, either above or under the spacer. It should be pointed out that the sensor could be provided within the spacer or the spacer could be the sensor itself. Alternatively, it could well be also that all of an inside surface of a glass sheet is coated with a metallic film being then the sensor.

Sensing patches have been described affixed onto outside surfaces of a glass sheet. Such sensors are provided on part of these surfaces. It could well be also that all of an outside surface of a glass sheet is coated with a metallic film being then the sensor.

## Claims

1. Method for collecting environmental parameters (4) of spaces (3) surrounding persons (2) with a set of sensors (6) of an ecosystem (1) for sensing these parameters, the system comprising means (6) for extracting data from the parameters (4), means (8) for uploading the data to a database (7) for storing the data thus accessible to entities (9) dedicated to the implementation of the data in applications, **characterized by**:
- providing the space (3) in buildings provided with windows (5) with a glazing (14) made of at least two sheets of glass (15, 16), with at least a spacer (17) and sealant (18) in between,
- mounting at least a sensor (6) between the two sheets (15, 16), and
- communicating (10, 11) the data outside the windows (5).

2. Method according to claim 1, wherein the data are communicated (10) outside the windows (5) through low energy and wireless communication.

3. Method according to claim 2, wherein the data are communicated outside the windows through one of the transmission group including blue tooth, WiFi, WirelessHART, ZigBee, NFC, RFID.

4. Method according to any one of claims 1 to 3, wherein other data are added to those of the database (7).

5. Method according to any one of claims 1 to 4, wherein the sensor (6) is power supplied with harvested energy.

6. Method according to any one of claims 1 to 5, wherein at least one sensing patch (22, 23) is mounted onto the outside surface of one of the glass sheets (15, 16), for sensing specific parameters.

7. Method for collecting environmental parameters (4) of spaces (3) surrounding persons (2) with a set of sensors (6) of an ecosystem (1) for sensing these parameters, the system comprising means (6) for extracting data from the parameters (4), means (8) for uploading the data to a database (7) for storing the data thus accessible to entities (9) dedicated to the implementation of the data in applications, **characterized by**:
- providing the space (3) in buildings provided with windows (5) with a glazing (14) made of a laminated pane (19) with two sheets of glass (20, 21) and an inner plastic material in between,
- mounting at least a sensor (6) between the two sheets (20, 21), and
- communicating (10, 11) the data outside the windows (5).

8. Method for collecting environmental parameters (4) of spaces (3) surrounding persons (2) with a set of sensors (6) of an ecosystem (1) for sensing these parameters, the system comprising means (6) for extracting data from the parameters (4), means (8) for uploading the data to a database (7) for storing the data thus accessible to entities (9) dedicated to the implementation of the data in applications, **characterized by**:
- providing the space (3) in buildings provided with windows (5) with a glazing (14) made of a monolithic sheet of glass,
- mounting at least one sensing patch onto one of the surfaces of the sheet and
- communicating (10, 11) the data outside the windows (5).

9. Ecosystem (1) comprising spaces (3) surrounding persons (2), a set of sensors (6), for sensing environmental parameters (4) of said spaces (3), means (6) for extracting data from the parameters (4), means (8) for uploading the data to a database (7) for storing the data, entities (9) for accessing said data and implementing them in applications, **characterized in that** said spaces (3) are provided in buildings provided with windows (5) with a glazing (14) made of at least two sheets of glass (15, 16), with at least a spacer (17) and sealant (18) in between, at least a sensor (6) being mounted between the two sheets (15, 16) and means (6, 10, 8) being provided for communicating said data outside the windows.

10. Ecosystem according to claim 9, wherein the sensor and the data extracting means are integrated within a sensor hub (6).

11. Ecosystem according to any one of claims 9 and 10, wherein the spacer (17) is located between the sealant (18) and the sensor (6).

12. Ecosystem according to any one of claims 9 and 10, wherein the sensor (6) is between the spacer (17) and the sealant (18).

13. Ecosystem according to any one of claims 9 and 10, wherein at least one of the windows (5) of the spaces (3) comprises a glazing (14") with three sheets of glass (15, 20, 21), two (20, 21) of them forming a laminated pane (19), and the sensor (6") is located between the two sheets (20, 21) of the laminated pane (19).

14. Ecosystem according to any one of claims 9 to 13, wherein a sensing patch (22, 23) is affixed to the outside surface of at least one of the glass sheets (15,20,21).

15. Ecosystem (1) comprising spaces (3) surrounding persons (2), a set of sensors (6), for sensing environmental parameters (4) of said spaces (3), means (6) for extracting data from the parameters (4), means (8) for uploading the data to a database (7) for storing the data, entities (9) for accessing said data and implementing them in applications, **characterized in that** said spaces (3) are provided in buildings provided with windows (5) with a glazing (14) made of a laminated pane (19) with two sheets of glass (20, 21) and an inner plastic material in between, at least a sensor (6") being mounted between the two sheets (20, 21) and means (6, 10, 8) being provided for communicating said data outside the windows.

16. Ecosystem (1) comprising spaces (3) surrounding persons (2), a set of sensors (6), for sensing environmental parameters (4) of said spaces (3), means (6) for extracting data from the parameters (4), means (8) for uploading the data to a database (7) for storing the data, entities (9) for accessing said data and implementing them in applications, **characterized in that** said spaces (3) are provided in buildings provided with windows (5) with a glazing (14) made of a monolithic sheet of glass, at least one sensing patch being mounted onto one of the surfaces of the sheets and means being provided for communicating said data outside the windows.

17. Glazing (14) of a window (5) of a space (3) surrounding persons (2) of an ecosystem (1), **characterized in that** it comprises at least two sheets of glass (15, 16) with at least a spacer (17) and sealant (18) between the two sheets (15, 16) and at least a sensor (6) between the two sheets (15, 16) for sensing environmental parameters (4) of the space (3), prior to extracting data therefrom to be uploaded to a database (7) accessible to entities (9) of the ecosystem (1) dedicated to the implementation of the data in applications for the benefit of the persons (2) of the ecosystem (1).

18. Glazing according to claim 17, comprising three sheets of glass (15, 20, 21), two (20, 21) of them forming a laminated pane (19), the sensor (6") being located between the two sheets (20, 21) of the laminated pane (19).

19. Glazing (14) of a window (5) of a space (3) surrounding persons (2) of an ecosystem (1), **characterized in that** it comprises a laminated pane (19) with two sheets of glass (20, 21) and an inner plastic material between the two sheets (20, 21) and a sensor (6") between the two sheets (20, 21) for sensing environmental parameters (4) of the space (3), prior to extracting data therefrom to be uploaded to a database (7) accessible to entities (9) of the ecosystem (1) dedicated to the implementation of the data in applications for the benefit of the persons (2) of the ecosystem (1).

20. Glazing (14) of a window (5) of a space (3) surrounding persons (2) of an ecosystem (1),
**characterized in that** it comprises a monolithic sheet of glass and at least one sensing patch affixed onto one of the surfaces of the sheet for sensing environmental parameters (4) of the space (3), prior to extracting data there from to be uploaded to a database (7) accessible to entities (9) of the ecosystem (1) dedicated to the implementation of the data in applications for the benefit of the persons (2) of the ecosystem (1).
